(19) **Europäisches Patentamt**

**European Patent Office**

**Office européen des brevets**

(11) **EP 0 852 853 B1**

(12) # EUROPEAN PATENT SPECIFICATION

(45) Date of publication and mention
of the grant of the patent:
**13.12.2006 Bulletin 2006/50**

(21) Application number: **96935901.7**

(22) Date of filing: **20.09.1996**

(51) Int Cl.:
*H04B 7/005* (2006.01)   *H04B 17/00* (2006.01)
*H04L 1/02* (2006.01)   *H04L 1/20* (2006.01)
*H04L 29/08* (2006.01)   *H04L 1/00* (2006.01)

(86) International application number:
**PCT/US1996/015187**

(87) International publication number:
**WO 1997/011535 (27.03.1997 Gazette 1997/14)**

(54) **CELLULAR COMMUNICATION SYSTEM AND METHOD WITH MULTIPLE CODE RATES**

ZELLULARES KOMMUNIKATIONSSYSTEM UND -VERFAHREN MIT VERSCHIEDENEN CODERATEN

SYSTEME ET PROCEDE DE COMMUNICATION CELLULAIRE AVEC DEBITS DE CODAGE MULTIPLES

(84) Designated Contracting States:
**DE ES FR GB IE IT NL**

(30) Priority: **22.09.1995 US 4800**
**12.10.1995 US 542541**

(43) Date of publication of application:
**15.07.1998 Bulletin 1998/29**

(73) Proprietor: **PACIFIC COMMUNICATION SCIENCES, INC.**
**San Diego, CA 92121 (US)**

(72) Inventors:
• **GARDNER, Steven, H.**
**San Diego, CA 92107 (US)**
• **PETRANOVICH, James, E.**
**Encinitas, CA 92024 (US)**
• **HARDIN, C., Thomas**
**Encinitas, CA 92024 (US)**

(74) Representative: **Käck, Jürgen et al**
**Patentanwälte**
**Kahler Käck Mollekopf**
**Vorderer Anger 239**
**86899 Landsberg (DE)**

(56) References cited:
**US-A- 5 230 003**      **US-A- 5 396 516**
**US-A- 5 546 411**

• **1988 VEHICULAR TECHNOLOGY CONFERENCE, issued 1988, T. SATO et al., "Error-Free High-Speed Data Transmission Protocol Simultaneously Applicable to Both Wire and Mobile Radio Channels", pages 489-496.**
• **4TH INTERNATIONAL CONFERENCE ON UNIVERSAL PERSONAL COMMUNICATIONS, April 1995, S. ABETA et al., "Adaptive Coding Rate and Processing Gain Control for Cellular DS/CDMA Systems", pages 241-245.**
• **4TH INTERNATIONAL CONFERENCE ON UNIVERSAL PERSONAL COMMUNICATIONS, April 1995, S. ARIDHI et al., "Performance Analysis of Type-I and Type-II Hybrid ARQ Protocols Using Concatenated Codes in a DS-CDMA Rayleigh Fading Channel", pages 748-752.**
• **6TH SYMPOSIUM ON PERSONAL, INDOOR AND MOBILE RADIO COMMUNICATIONS, January 1995, A. SAMPATH et al., "Power Control and Resource Management for a Multimedia CDMA Wireless System", pages 21-25.**

EP 0 852 853 B1

## Description

## BACKGROUND OF THE INVENTION

*1. Field of the Invention*

This invention relates to cellular radio communication systems, and more particularly to a method and apparatus for using multiple code rates for forward error correction in a cellular digital data radio communication system.

*2. Description of Related Art*

Forward error correction (FEC) coding techniques are frequently used for providing improved error rate performance in communication channels. FEC coding can enable a receiving station to reconstruct a corrupted version of the signal sent by a transmitting station. Errors in an original signal may be due, for example, to noise masking a low power signal, or interference, or shadowing of the signal by terrain features, or Rayleigh (multipath) interference.

FEC coding techniques have been in use since the 1960s and are described in many texts (e.g., "Error Correcting Coding for Digital Communications", George C. Clark & J. Bibb Cain, Plenum Press, 1981). A common feature of FEC coding techniques is that the process of encoding increases the number of bits required to be transmitted. The ratio of the number of bits entering the encoder to the number of bits to be sent over the channel is commonly called the "code rate". The lower the code rate, the greater the number of bits (comprising data bits and error-correction code bits) that must be transmitted.

Increasing the number of bits to be transmitted requires that either more bandwidth be available for transmission or that the rate at which the user's information is sent on the channel (the "data rate") be reduced to the point that the signal containing the coded data has the same bandwidth that would have been occupied by the uncoded signal.

In general, with all other things being equal, using an FEC code with a lower code rate provides better error correction performance. Thus, in a very poor channel it may be desirable to use a very low code rate to achieve an acceptable error rate performance. In a better channel, the error correcting performance of a very low code rate may be unnecessary. In such cases, a higher code rate could provide adequate error rate performance with a lower transmitted code bit rate, and thus higher data rate. Thus, in such situations, it may be more desirable to use a higher code rate, especially in systems where available bandwidth is fixed.

In many communication systems, such as satellite systems, the signal level at the receiver varies relatively little from site to site and over time. The main concern of the designer of such system is often the power required to be sent over the link, and bandwidth may be a lesser concern. The system designer then may choose a single low code rate, and if properly chosen, this one code rate will provide adequate performance without wasting resources in most conditions.

In land mobile radio communications, however, the signal at the receiver varies over a wide range depending on the distance from the base station to the mobile unit, the presence or absence of terrain features that can shadow the signal, and fading due to the Rayleigh effect. Channels are fixed in bandwidth, so use of FEC coding reduces channel throughput. On the forward link (from the base station to the mobile unit), it is often cost effective merely to increase transmitter power to ensure that the received signal level is adequate and code rates can be kept relatively high. On the reverse link, the mobile unit is frequently extremely limited in transmit power capability due to the need to minimize power consumption for long battery life and also due to potential health hazards from having a high-powered microwave transmitter in proximity with the human body. In many situations, the power level on the forward link is sufficient for the mobile unit to receive well, but the error rate on the reverse link is unacceptable because the power received at the base station is inadequate. Using a lower code rate can often solve this problem, but only at the expense of reducing system throughput.

The paper "Adaptive Coding Rate and Processing Gain Control for Cellular DS/CDMA Systems", April 1995, Abeta et al., IEEE 4th Int. Conf. on Universal Personal Communications, p. 241-245, discloses an adaptive method to change the coding rate and the processing gain in dependency of the received C/I performance in order to improve the bit error rate (BER) of the communication system. The communication system comprises a base station and a mobile station. The interference spectral density $C/(N_0+I_0)$ is calculated from the power signal transmitted by the base station and, in dependency of this signal, switches between the two coding rates $r=1/2$ and $r=2/3$ and between four symbol rates corresponding to the processing gain. Thereby the BER is kept below a threshold.

It is an object of the invention to provide methods of improving transmission performance in a cellular digital data radio communication system and a corresponding system in which the transmission quality is further improved.

The invention is defined in claims 1, 10 and 13, respectively.

Preferred embodiments are set out in the dependent claims.

This invention comprises a method and apparatus for using multiple code rates for forward error correction in a cellular digital data radio communication system. Each base station broadcasts a quantity called the power product (PP), which is equal to the base station transmit power, $P_{BT}$ (in Watts), multiplied by the desired receive power level at the base station, $P_{BR}$ (in Watts). For a mobile unit to determine its appropriate transmit power, $P_{MT}$ (in Watts), simply requires measuring the power received, $P_{MR}$ (in Watts), at the mobile unit and performing the following calculation:

$$P_{MT} = PP/P_{MR}$$

When channel conditions such as distance or shadowing are such that the channel path loss is large, it is possible that the power control calculation above will return a value that is greater than the maximum transmit power capability of the mobile unit. In this case, the power received at the base station will be less than desired, and the resulting error performance may be unacceptable. Accordingly, under the inventive system, when a mobile unit determines that the desired transmit power level exceeds its capability, the mobile unit can then select a lower code rate. The base station receiver sensitivity improves as the code rate decreases, so the result is similar to increasing the transmitter power.

In the preferred embodiment, the invention uses 3 different code rates. Each is based on a constraint length 7 convolutional code that is standard in the industry. In most cases, the code rate used is rate 2/3, but when a mobile unit determines that it needs more transmit power than it is capable of providing, the code rate is changed to 1/2, and in severe cases the code rate is changed to 1/3.

Other features of the invention are that mobile unit code rate selection can be based on the quantity of data to be transmitted, and a base station can determine the code rate used by a mobile unit by attempting to decode all code rates and choosing the best result.

Key benefits of this invention are that it (1) allows the most disadvantaged mobile units in a mobile wireless data communication system to achieve acceptable reverse link error performance through the use of very low code rates (2) without introducing the capacity degradation that results from low code rates into all transmissions of non-disadvantaged mobile units, which comprise the majority of transmissions within a cellular radio communication system.

The details of the preferred embodiment of the present invention are set forth in the accompanying drawings and the description below. Once the details of the invention are known, numerous additional innovations and changes will become obvious to one skilled in the art.

## BRIEF DESCRIPTION OF THE DRAWINGS

FIGURE 1 is a block diagram showing a typical prior art cellular radio communication system.

FIGURES 2a and 2b are flow charts showing the preferred method for selecting a code rate for a mobile unit in accordance with the present invention.

FIGURE 3a is a block diagram of a first embodiment of a forward error correction code encoder that may be used with the present invention.

FIGURE 3b is a block diagram of a second embodiment of a forward error correction code encoder that may be used with the present invention.

FIGURE 3c is a block diagram of a third embodiment of a forward error correction code encoder that may be used with the present invention.

Like reference numbers and designations in the various drawings indicate like elements.

## DETAILED DESCRIPTION OF THE INVENTION

Throughout this description, the preferred embodiment and examples shown should be considered as exemplars, rather than as limitations on the present invention.

## Principles of Operation

The present invention uses a forward error correction technique in which a mobile unit in a cellular digital data radio communication system is capable of transmitting with multiple code rates. Because FEC coding is a way of overcoming insufficient transmit power capability in a mobile unit, selection of a code rate is preferably incorporated into the mobile unit power control algorithm. In the preferred embodiment, the power control algorithm is based on the method used in the Cellular Digital Packet Data (CDPD) standard. This method takes advantage of the fact that forward link and reverse link path loss are very nearly equal on average. The forward link path loss can be determined by dividing the base station transmit power, $P_{BT}$ (in Watts) by the power received at the mobile unit, $P_{MR}$ (in Watts). The reverse link path loss is equal to the mobile unit transmit power, $P_{MT}$ (in Watts), divided by the power level received at the base station, $P_{BR}$ (in Watts). Setting these two path losses equal to each other and manipulating the result yields:

$$P_{MT} = P_{BT} * P_{BR}/P_{MR}$$

Thus, if a mobile unit can determine the base station transmitter power and can estimate the power level the mobile unit itself is receiving, and if the mobile unit can determine what power level the base station needs to receive for acceptable performance, the mobile unit can determine the required mobile transmit power. In the CDPD standard, each base station broadcasts a quantity called the power product (PP), which is equal to

$P_{BT}*P_{BR}$. For a mobile unit to determine its appropriate transmit power simply requires measuring the received power at the mobile unit and performing a simple calculation. Accordingly, the inventive system determines if the transmitted error-correction encoded data is satisfactorily received by the base station, and if not, a lower code rate is selected for use by the mobile unit.

When channel conditions such as distance or shadowing are such that the channel path loss is large, it is possible that the power control calculation above will return a value that is greater than the maximum transmit power capability of the mobile unit. In this case, the power received at the base station will be less than desired, and the resulting error performance may be unacceptable. Accordingly, under the inventive system, when a mobile unit determines that the desired transmit power level exceeds its capability, the mobile unit can then select a lower code rate. The base station receiver sensitivity improves as the code rate decreases, so the result is similar to increasing the transmitter power.

In the preferred embodiment, the invention uses 3 different code rates. Each is based on a constraint length 7 convolutional code that is standard in the industry. In most cases, the code rate used is rate 2/3, but when a mobile unit determines that it needs more transmit power than it is capable of providing, the code rate is changed to 1/2, and in severe cases the code rate is changed to 1/3. Each of these codes is easily decoded at the base station using a single-chip decoder (e.g., the QUALCOMM Q1650 integrated circuit). The exact choice of the number of code rates, the precise FEC codes used, and the rates selected are not a limitation of the present invention. For example, the FEC code may be selected from, or be a combination of, Reed Solomon codes, BCH codes, Hamming codes, and other FEC codes.

In general, total system capability is a key performance issue, and thus it is desirable to maintain as high a code rate as possible in most situations. In the preferred embodiment, data is structured into blocks (preferably about 400 bits each). Accordingly, there are times when extra bits are available in a block because the data to be sent is inadequate to fill the block. Thus, it may be possible to use a lower code rate and still fit all the data within the same number of blocks that would have been required for a higher code rate. Therefore, a lower code rate can be selected and the same power level used as would have been needed for the higher code rate. This results in performance in excess of what is required, or, alternatively, transmit power can be reduced to provide the same performance as would be achieved with the higher code rate, resulting in less battery drain for the mobile unit and decreasing the amount of RF interference that transmission causes in other cells in the cellular system.

Because convolutional codes work best when errors are uncorrelated, a means to de-correlate errors that result from fading is useful (this may not be needed with other types of codes). In the preferred embodiment, an interleaver is used to de-correlate the data to be transmitted in known fashion. In the preferred embodiment, the interleaver used is a 20x20 row-column interleaver (although other dimensions and other interleaving methods can be used).

In the preferred embodiment, reverse link messages are transmitted in a fashion similar to the CDPD standard: a message begins with a dotting sequence followed by a synchronization word and other header bits, and then a series of one to many blocks interspersed with control bits. The power level and code rate are preferably selected at the beginning of message transmission and are not changed during transmission. Each block is encoded independently using common code "tailing" or bit flushing techniques for applying convolutional codes to data having a block structure.

In the preferred embodiment, a base station can determine the code rate of incoming messages by either of two methods. In the first method, uncoded bits are provided in the header of each message block that indicate the code rate. However, these bits are vulnerable to errors due to fading, and the base station may fail to extract the proper code rate from these bits. Therefore, a second method is provided that utilizes the fact that each block contains a cyclic redundancy check (CRC) code that allows a base station to determine whether there are any errors remaining in the decoded data. The base station can thus try to decode the data with each possible code rate and choose whichever code rate produces a result that is indicated as being error-free by the CRC. If no code rate yields a block that appears to be error free, the message is discarded.

It is not necessary to have a CRC to determine the code rate; other methods of determining which code rate provides the best output can be used. Some examples of such schemes are (1) to observe the decoded metric growth rate in each code rate; or (2) to re-encode the data coming out of a base station decoder using a selected rate, comparing the decoded data to the demodulated data, and choosing the rate that results in the best agreement. Another possibility is to make use of the CDPD standard "color code" field. Under the CDPD standard, the first 8 bits of a block are fixed, and thus known in advance. Accordingly, if one code rate decoding of a received block generates bits that match the known pattern, that code rate can be chosen.

## Details of Preferred Embodiment

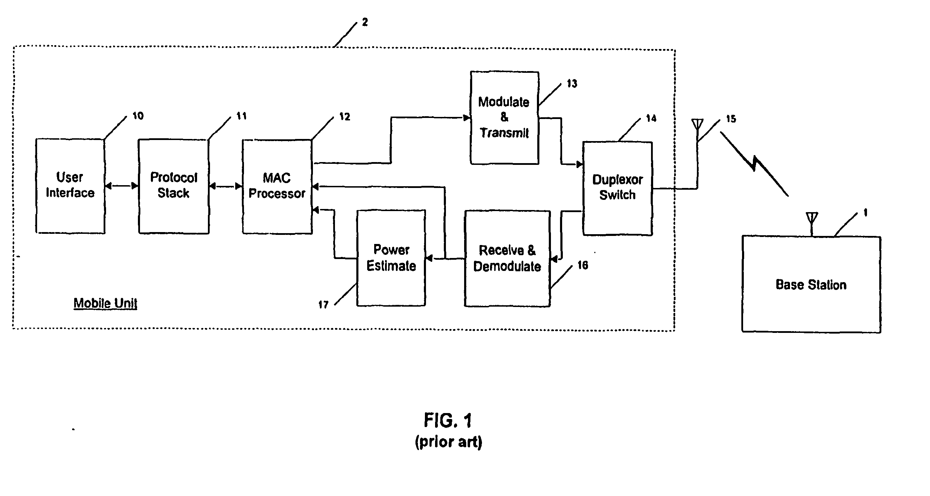

FIGURE 1 is a block diagram showing a typical prior art cellular radio communication system. A base station 1 is coupled by radio transmissions through an antenna to a mobile unit 2. The mobile unit 2 comprises a user interface 10, a protocol stack 11, a media access control (MAC) processor 12, a modulate and transmit circuit 13, a duplexor switch 14, an antenna 15, a receive and demodulate circuit 16, and a power estimate circuit 17, coupled as shown in known fashion.

The inventive system may be implemented in hardware or software, or a combination of both. In particular, the calculation of mobile unit transmit power, the selection of code rates by the mobile unit, and base station determination of the code rate of messages received from mobile units may be implemented in computer programs executing on programmable computer processors in the base stations and mobile units of a cellular radio communication system. Each computer program is preferably stored on a storage media or device (e.g., ROM or magnetic diskette) readable by a general or special purpose computer processor, for configuring and operating the computer processor when the storage media or device is read by the computer processor to perform the procedures described herein. The inventive system may also be considered to be implemented as a computer-readable storage medium, configured with a computer program, where the storage medium so configured causes a computer processor to operate in a specific and predefined manner to perform the protocol described herein.

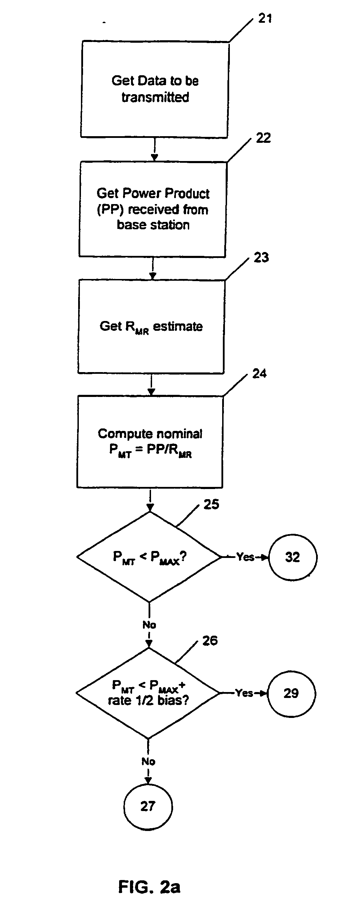

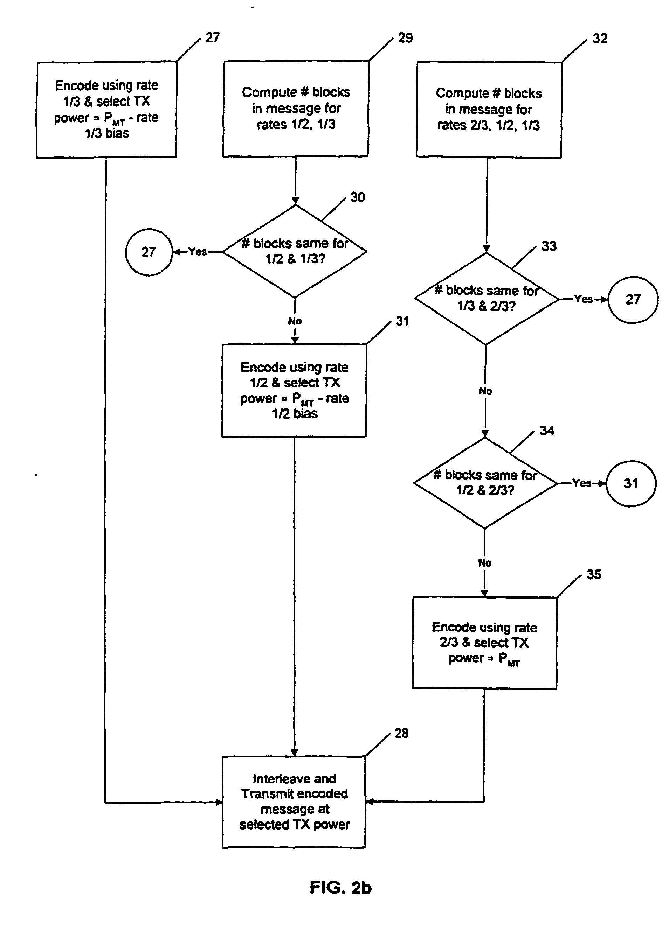

FIGURES 2a and 2b are flow charts showing the preferred method for selecting a code rate for a mobile unit in accordance with the present invention. Initially, the mobile unit processing system fetches the data to be transmitted, in known fashion (Step 21). In the preferred embodiment, data is formatted in the form of 400-bit blocks. Entire blocks are transmitted, even if not all of the block capacity is required for a particular message.

The power product PP is periodically transmitted by each base station 1 in a cellular system, and received by all mobile units 2 within range. The power product PP is based on the premise that all mobile units 2 will normally transmit using a code rate of 2/3. The power product PP received from the base station 1 is fetched from the appropriate register or location in the mobile unit 2 (Step 22). An estimate of the power of the received signal, $P_{MR}$, from the base station 1 is obtained in known fashion from the power estimate circuit 17 (under the CDPD standard, $P_{MR}$ is the standard Received Signal Strength Indicator (RSSI) signal) (Step 23). The mobile unit 2 can then compute a nominal transmit power $P_{MT}$ as the quotient of the power product PP divided by the estimated received power $P_{MR}$ (Step 24). In the preferred embodiment, this calculation is done for each transmission. However, the calculation could be done for each message block.

The nominal transmit power $P_{MT}$ is compared to the maximum transmit power $P_{MAX}$ of the mobile unit 2 (Step 25). If the required nominal transmit power $P_{MT}$ is less than the maximum transmit power $P_{MAX}$, then the mobile unit 2 computes the number of blocks required to encode the message with each of code rates 2/3, 1/2, and 1/3 (Step 32). This is done to take advantage of the fact that a user's data may not fill a complete message block, and thus some "slack" may exist in the message block. Accordingly, one rule that could be applied is that if the number of blocks is the same for two code rates, the lower code rate is selected to provide higher reliability at the same transmit power without increasing the total number of bits transmitted (since entire blocks are always transmitted). Alternatively, the availability of "slack" would allow the use of a lower transmit power at a low code rate to conserve battery life for the mobile unit, while keeping the same error rate performance as the use of a higher transmit power at a higher code rate. In general, transmit power, code rate, and error rate can be traded off against each other as desired. In the preferred embodiment, power conservation and low code rate are optimized to give acceptable error rates. Accordingly, the number of blocks for code rate 2/3 and code rate 1/3 are compared (Step 33). If equal, the message is encoded using code rate 1/3, and a transmit power is selected that approximates the computed nominal transmit power $P_{MT}$ minus a bias factor (explained below) for code rate 1/3 (Step 27). The encoded message is then preferably interleaved and then transmitted (Step 28).

If the comparison in Step 33 is not equal, the number of blocks for code rate 2/3 and code rate 1/2 are compared (Step 34). If equal, the message is encoded using code rate 1/2, and a transmit power is selected that approximates the computed nominal transmit power $P_{MT}$ minus a bias factor for code rate 1/2 (Step 31). The encoded message is then preferably interleaved and then transmitted (Step 28).

If the comparison in Step 34 is not equal, the message is encoded using code rate 2/3, and a transmit power is selected that approximates the computed nominal transmit power $P_{MT}$ (Step 35).

If the nominal transmit power $P_{MT}$ was not less than the maximum transmit power $P_{MAX}$ (Step 25), the nominal transmit power $P_{MT}$ is compared to the maximum transmit power $P_{MAX}$ of the mobile unit 2 plus a bias factor for rate 1l2 (Step 26). If the required nominal transmit power $P_{MT}$ is less than such sum, then the mobile unit 2 computes the number of blocks required to encode the message with each of code rates 1/2 and 1/3 (Step 29). The number of blocks for code rate 1/2 and code rate 1/3 are compared (Step 30). If equal, the message is encoded using code rate 1/3, and a transmit power is selected that approximates the computed nominal transmit power $P_{MT}$ minus a bias factor for code rate 1/3 (Step 27). The encoded message is then preferably interleaved and then transmitted (Step 28).

If the number of blocks for code rate 1/2 and code rate 1/3 are not equal (Step 30), the message is encoded using code rate 1/2, and a transmit power is selected that approximates the computed nominal transmit power $P_{MT}$ minus a bias factor for code rate 1/2 (Step 31). The encoded message is then preferably interleaved and then transmitted (Step 28).

If the required nominal transmit power $P_{MT}$ is not less than the maximum transmit power $P_{MAX}$ plus a bias factor for rate 1/2 (Step 26), then the message is encoded using code rate 1/3, and a transmit power is selected that approximates the computed nominal transmit power $P_{MT}$ minus a bias factor for code rate 1/3 (Step 27). The encoded message is then transmitted (Step 28).

Each bias factor represents the expected increase in signal-to-noise ratio for a particular encoding (meaning that the receive power $P_{BR}$ at the base station can be lower and yet achieve the same error rate performance as a higher code rate). In the preferred embodiment, the bias for rate 1/2 is about 1.5 dB, and the bias for rate 1/3 is about 3 dB. Thus, including such bias factors improves overall performance of the inventive system. However, such bias factors are not necessary to practice the basic concepts of the invention.

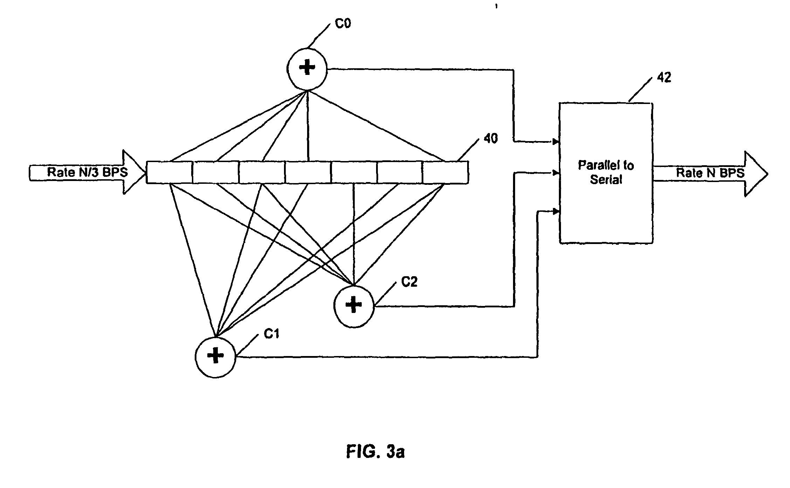

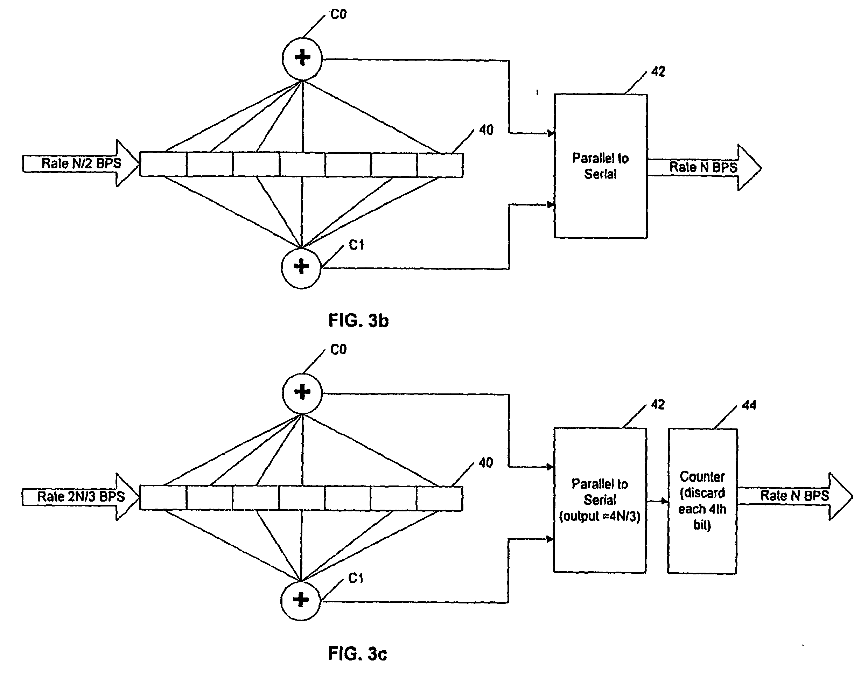

FIGURE 3a is a block diagram of a first embodiment of a forward error correction code encoder that may be used with the present invention. Input data at a rate of N/3 bits per second is input into a 7-bit register 40. The contents of the register 40 are coupled to three exclusive OR circuits C0, C1, and C2, as shown. For FIGURE 3a, the FEC combinatorial polynomials are as follows:

$$C0 = X^1 + X^2 + X^3 + X^4 + X^7$$

$$C1 = X^1 + X^3 + X^4 + X^6 + X^7$$

$$C2 = X^1 + X^2 + X^3 + X^5 + X^7$$

The output of the exclusive OR circuits C0, C1, and C2 are coupled to a parallel to serial converter 42, in known fashion. The output of the parallel to serial circuit is a data stream having a rate of N.

FIGURE 3b is a block diagram of a second embodiment of a forward error correction code encoder that may be used with the present invention. Input data at a rate of N/2 bits per second is input into a 7-bit register 40. The contents of the register 40 are coupled to two exclusive OR circuits C0 and C1, as shown. For FIGURE 3b, the FEC combinatorial polynomials are as follows:

$$C0 = X^1 + X^2 + X^3 + X^4 + X^7$$

$$C1 = X^1 + X^3 + X^4 + X^6 + X^7$$

The output of the exclusive OR circuits C0 and C1 are coupled to a parallel to serial converter 42, in known fashion. The output of the parallel to serial circuit is a data stream having a rate of N.

FIGURE 3c is a block diagram of a third embodiment of a forward error correction code encoder that may be used with the present invention. Input data at a rate of 2N/3 bits per second is input into a 7-bit register 40. The contents of the register 40 are coupled to two exclusive OR circuits C0 and C1, as shown. For FIGURE 3c, the FEC combinatorial polynomials are the same as for FIGURE 3b. The output of the exclusive OR circuits C0 and C1 are coupled to a parallel to serial converter 42, in known fashion. The output of the parallel to serial converter 42 is 4N/3 bits per second. However, the output of the parallel to serial converter 42 is coupled to a simple counter circuit 44 which gates out only 3 of every 4 bits (i.e., it discards every 4th bit), to achieve an output data stream having a rate of N. In the preferred embodiment, the count pattern discards every other bit of C0 (gating or "puncture" pattern of binary 10), and keeps every bit of C1 (gating or "puncture" pattern of binary 11).

The invention may also be used on the forward link of a cellular digital data radio communication system. That is, one can achieve a gain in system performance by varying the code rate in the forward (outbound) signal from the base station to mobile units. In cases where the link is one-to-one (*i.e.*, one mobile unit per base channel), this advantage is more obvious, but the invention may also provide benefits in one-to-many link systems. If the signal level received at a base station is less than the desired level for the code rate being used, the base station can determine approximately what receive power level the mobile unit sees. To determine this, the base station may assume that the mobile is transmitting at its maximum power and that the base station knows what that maximum power is. The procedure is then straightforward. If the power transmitted by the mobile is $P_{MT}$ and the received power at the base station is $P_{BR}$ (taking into account the difference in antenna gains for receive versus transmit), then the path loss is calculated as $P_{MT}/P_{BR}$. The power level that the mobile unit is receiving on the forward channel, $P_{MR}$, is then $P_{BT}*P_{BR}/P_{MT}$. The system should be setup such that there is a desired, minimum value of $P_{MR}$ for each available code rate. When the base station determines that the power at the mobile unit is too low for the chosen forward channel code rate, then the base station can choose a lower code rate to lower the block error rate at the mobile unit's receiver.

Alternatively, in situations where the link is balanced (*i.e.,* the receiver performance is approximately the same for both the mobile unit and the base station), then the base station can change code rate when it sees that the mobile unit has changed its code rate. The mobile unit will then know approximately when its received signal will change rates, thus reducing the complexity of the mobile unit.

Alternatively, the mobile unit can inform the base station, by means of a transmitted message, that the mobile unit's receive level is too low for the current coding rate and request a new code rate. If the mobile unit does not notice that the code rate has changed, the mobile unit can assume that its message was not received by the base station and that it must retransmit the message until the code rate gets changed. The decision of when to request a code rate change can be based upon short term block error rate, received power level, short term bit error rate, or other characteristic.

Alternatively, and again under the assumption that the links are somewhat balanced, the base station can use the reverse channel block error rate as an indication that the code rate being used in the reverse direction is insufficient and thus the code rate selection for the forward channel should be reduced to be lower than the most recently known code rate used on the reverse link.

Summary

To summarize, key benefits of this invention are that it (1) allows the most disadvantaged mobile units in a mobile wireless data communication system to achieve acceptable reverse link error performance through the use of very low code rates (2) without introducing the capacity degradation that results from low code rates into all transmissions of non-disadvantaged mobile units, which comprise the majority of transmissions within a cellular radio communication system. Some of the unique features of this invention are:

(1) variable rate coding employed in the reverse link of a mobile wireless data communications system;
(2) mobile unit code rate selection integrated with mobile power control to provide a minimum acceptable performance level at the base station;
(3) mobile unit code rate selection based on the quantity of data to be transmitted;
(4) base station determination of code rate by attempting to decode all code rates and choosing the best result

A number of embodiments of the present invention have been described. Nevertheless, it will be understood that various modifications may be made without departing from the scope of the invention. For example, the method or algorithm for selecting code rates may instead be (1) based on the receive (forward) channel block error rate; (2) based on the transmit (reverse) channel block error rate; (3) based on the rate of retransmissions in a link; and (4) calculated by a base station from known characteristics of a mobile unit and measurements of the channel between the base station and such mobile unit, and then transmitted to such mobile unit. As a further example, only two code rates may be used, or more than three code rates may be used. Moreover, as would be recognized in the art, the order in which the steps shown in FIGURES 2a and 2b can be changed in many cases without affecting the result of the procedure. Still further, the invention may be used on the forward link as well as the reverse link of a communication system. Accordingly, it is to be understood that the invention is not to be limited by the specific illustrated embodiment, but only by the scope of the appended claims.

**Claims**

1. A method of improving transmission performance in a cellular digital data radio communication system (1, 2), comprising the steps of:

(a) determining (24) a desired transmit power level ($P_{MT}$) for a mobile unit (2) for transmitting data from the mobile unit to a base station (1);
(b) determining (25) if the desired transmit power level ($P_{MT}$) is less than a maximum transmit power level ($P_{MAX}$) of the mobile unit (2); and if so,

(b.1) selecting (32) a first code rate for error-correction encoding such data, and a first transmit power level less than or equal to the maximum transmit power level ($P_{MAX}$) of the mobile unit (2), and transmitting error-correction encoded data from the mobile unit to the base station (1) using the first code rate and the first transmit power level; and if not,
(b.2) selecting (29) a second code rate, less than the first code rate, for error-correction encoding such data, and a second transmit power level less than or equal to the maximum transmit power level ($P_{MAX}$) of the mobile unit (2) minus a bias factor related to the expected increase of the signal-to-noise ratio using the second code rate, and transmitting error-correction encoded data from the mobile unit (2) to the base station (1) using the second code rate and the second transmit power level.

2. The method of claim 1, wherein data is transmitted in blocks, wherein in substep (b.1) prior to selecting the first code rate the following selection is performed:

selecting (34) the second code rate if the number of blocks required to transmit such data is the same for the second code rate as for the first code rate.

3. The method of claim 1 or 2, including the further step of:

at the base station (1), determining the code rate for error-correction encoded data received from the mobile unit (2) by attempting to decode such data using all possible code rates available to the mobile unit, and choosing the code rate that best decodes such data.

4. The method of claim 1, 2 or 3, including the further step of:

interleaving the error-correction encoded data before transmission from the mobile unit (2).

5. The method of any of claims 1 to 4, wherein instead of substep (b.2) the following steps are performed: determining if the desired transmit power level ($P_{MT}$) is less than the maximum transmit power level ($P_{MAX}$) of the mobile unit (2) plus a first bias factor related to the expected increase of the signal-to-noise ratio using a second code rate, and if so, selecting the second code rate, less than the first code rate, for error-correction encoding such data, and a second transmit power level less than or equal to the maximum transmit power level ($P_{MAX}$) of the mobile unit (2) minus the first bias factor, and transmitting error-correction encoded data from the mobile unit to the base station (1) using the second code rate and the second transmit power level; (and if not, selecting a third code rate, less than the second code rate, for error-correction encoding such data, and a third transmit power level less than or equal to the maximum transmit power level of the mobile unit minus a second bias factor related to the third code rate, and transmitting error-correction encoded data from the mobile unit to the base station using the third code rate and the third transmit power level.

6. The method of claim 5, wherein data is transmitted in blocks, including the further steps of:

if the desired transmit power level ($P_{MT}$) is less than a maximum transmit power level ($P_{MAX}$) of the mobile unit (2), then:

selecting the third code rate if the number of blocks required to transmit such data is the same for the third code rate as for the first code rate; otherwise selecting the second code rate if the number of blocks required to transmit such data is the same for the second code rate as for the first code rate.

7. The method of claim 5, wherein data is transmitted in blocks, including the further steps of:

if the desired transmit power level ($P_{MT}$) is less than a maximum transmit power level ($P_{MAX}$) of the mobile unit (2) plus the first bias factor, then:

selecting the third code rate if the number of blocks required to transmit such data is the same for the third code rate as for the second code rate.

8. The method of claim 5, including the further step of:

(a) at the base station (1), determining the code rate for error-correction encoded data received from a mobile unit by attempting to decode such data using all possible code rates available to the mobile unit (2), and choosing the code rate that best decodes such data.

9. The method of claim 5, including the further step of:

interleaving (28) the error-correction encoded data before transmission from the mobile unit (2).

10. A system for improving transmission performance in a cellular digital data radio communication system, comprising:

(a) a wireless transmission system (1,2) for transmitting error-correction encoded data from a mobile unit (2) to a base station (1); (b) a selector, coupled to the wireless transmission system (1, 2), the selector being adapted to determine (25) if a desired transmit power level ($P_{MT}$) is less than a maximum transmit power level ($P_{MAX}$) of the mobile unit (2):

and if so, is adapted to select a first code rate for the mobile unit (2) for error-correction encoding of such data, and a first transmit power level less than or equal to the maximum transmit power level ($P_{MAX}$) of the mobile unit (2), wherein the mobile unit (2) is adapted to transmit error-correction encoded data to the base station (1) using the first code rate and the first transmit power level; and and if not, is adapted to select a second code rate, less than the first code rate, for the mobile unit (2) for error-correction encoding of such data, and a second transmit power level less than or equal to the maximum transmit power level ($P_{MAX}$) of the mobile unit (2) minus a bias factor related to the expected increase of the signal-to-noise ratio using the second code rate, wherein the mobile unit (2) is adapted to transmit error-correction encoded data to the base station (1) using the second code rate and the second transmit power level.

11. The system of claim 10, further comprising:

a comparator coupled to the selector and adapted to determine if the number of blocks required to transmit such data is the same for the second code rate as for the first code rate, and if so, then to cause the selector to select the second code rate in preference to the first code rate.

**12.** The system of claim 10, further including an interleaver adapted to interleave (28) the error-correction encoded data before transmission from the mobile unit (2).

**13.** A method of improving transmission performance in a cellular digital data radio communication system (1, 2) wherein data is transmitted in blocks of a given size, comprising the steps of:

determining (24) a desired transmit power level ($P_{MT}$) for a mobile unit (2) for transmitting data from the mobile unit to a base station (1);
determining (25) if the desired transmit power level ($P_{MT}$) is less than a maximum transmit power level ($P_{MAX}$) of the mobile unit (2), and if so,
computing the number of blocks required to encode a message to be transmitted in a first code rate or in a second code rate, wherein the second code rate is less than the first code rate; and
selecting (34) the second code rate if the number of blocks required to transmit such data is the same for the second code rate as for the first code rate.

**14.** A computer program for improving transmission performance in a cellular digital data radio communication system, wherein when the computer program is running on a computer the computer is executing a method according to any of claims 1 to 9 or 13.

**15.** A computer-readable storage medium, configured with a computer program according to claim 14.


**Patentansprüche**

**1.** Ein Verfahren zur Verbesserung der Übertragungsleistungsfähigkeit in einem zellularen Digitaldaten-Funkkommunikationssystem (1,2), das die Schritte aufweist:

(a) Feststellen (24) eines gewünschten Übertragungsleistungspegels ($P_{MT}$) für eine mobile Einheit (2) zum Übertragen von Daten von der mobilen Einheit (2) zu einer Basisstation (1);
(b) Feststellen (25), ob der gewünschte Übertragungsleistungspegel ($P_{MT}$) kleiner als ein maximaler Übertragungsleistungspegel ($P_{MAX}$) der mobilen Einheit (2) ist;
und, falls dies zutrifft,

(b.1) Auswählen (32) einer ersten Coderate zur Fehlerkorrekturcodierung solcher Daten und eines ersten Übertragungsleistungspegels ($P_{MT}$), der kleiner oder gleich dem maximalen Übertragungsleistungspegel ($P_{MAX}$) der mobilen Einheit (2) ist und Übertragen von Fehlerkorrektur-codierten Daten von der mobilen Einheit zur Basisstation (1) unter Verwendung der ersten Coderate und des ersten Übertragungsleistungspegels; und, falls dies nicht zutrifft,
(b.2) Auswählen (29) einer zweiten Coderate, die kleiner als die erste Coderate ist, zur Fehlerkorrekturcodierung solcher Daten und eines zweiten Übertragungsleistungspegels, der kleiner oder gleich ist dem maximalen Übertragungsleistungspegel ($P_{MAX}$) der mobilen Einheit (2) abzüglich eines Fehlerfaktors, der sich auf die erwartete Erhöhung des Signal-Rausch-Verhältnisses unter Verwendung der zweiten Coderate bezieht, und Übertragen von Fehlerkorrektur-codierten Daten von der mobilen Einheit (2) zur Basisstation (1) unter Verwendung der zweiten Coderate und des zweiten Übertragungsleistungspegels.

**2.** Verfahren nach Anspruch 1, wobei Daten in Blöcken übertragen werden, wobei in Teilschritt (b.1) vor dem Auswählen der ersten Coderate die folgende Auswahl ausgeführt wird:

Auswählen (34) der zweiten Coderate, falls die Anzahl der zum Übertragen solcher Daten benötigten Blöcke für die zweite Coderate und die erste Coderate die gleiche ist.

**3.** Verfahren nach Anspruch 1 oder 2, das den weiteren Schritt umfasst:

An der Basisstation (1): Feststellen der Coderate der von der mobilen Einheit (2) empfangenen Fehlerkorrektur-codierten Daten durch Versuche der Decodierung solcher Daten unter Verwendung aller möglichen Coderaten, die der mobilen Einheit zur Verfügung stehen und Auswählen der Coderate, die solche Daten am besten decodiert.

**4.** Verfahren nach Anspruch 1, 2 oder 3, das den weiteren Schritt umfasst:

Verschachteln der Fehlerkorrektur-codierten Daten vor dem Übertragen von der mobilen Einheit (2).

**5.** Verfahren nach einem der Ansprüche 1 bis 4, wobei anstatt Teilschritt (b.2) die folgenden Schritte ausgeführt werden: Feststellen, ob der gewünschte Übertragungsleistungspegel ($P_{MT}$) kleiner ist als der maximale Übertragungsleistungspegel ($P_{MAX}$) der mobilen Einheit (2) zuzüglich eines ersten Fehlerfaktors, der sich auf die erwartete Erhöhung des Signal-Rausch Verhältnisses unter Verwendung einer zweiten Coderate bezieht,

und, falls dies zutrifft,

Auswählen der zweiten Coderate, die kleiner als die erste Coderate ist, zur Fehlerkorrekturcodierung solcher Daten und eines zweiten Übertragungsleistungspegels, der kleiner oder gleich ist dem maximalen Übertragungsleistungspegel ($P_{MAX}$) der mobilen Einheit (2) abzüglich des ersten Fehlerfaktors und Übertragen von Fehlerkorrektur-codierten Daten von der mobilen Einheit (2) zur Basisstation (1) unter Verwendung der zweiten Coderate und des zweiten Übertragungsleistungspegels;

und, falls dies nicht zutrifft,

Auswählen einer dritten Coderate, die kleiner als die zweite Coderate ist, zur Fehlerkorrekturcodierung solcher Daten und eines dritten Übertragungsleistungspegels, der kleiner oder gleich ist dem maximalen Übertragungsleistungspegel der mobilen Einheit abzüglich eines zweiten Fehlerfaktors, der sich auf die dritte Coderate bezieht und Übertragen von Fehlerkorrektur-codierten Daten von der mobilen Einheit zur Basisstation unter Verwendung der dritten Coderate und des dritten Übertragungsleistungspegels.

6. Verfahren nach Anspruch 5, wobei Daten in Blöcken übertragen werden, das die weiteren Schritte umfasst:

falls der gewünschte Übertragungsleistungspegel ($P_{MT}$) kleiner als ein maximaler Übertragungsleistungspegel ($P_{MAX}$) der mobilen Einheit (2) ist, dann:

Auswählen der dritten Coderate, falls die zum Übertragen solcher Daten benötigte Anzahl von Blöcken für die dritte Coderate und die erste Coderate die gleiche ist; andernfalls
Auswählen der zweiten Coderate, falls die zum Übertragen solcher Daten benötigte Anzahl von Blöcken für die zweite Coderate und die erste Coderate die gleiche ist.

7. Verfahren nach Anspruch 5, wobei Daten in Blöcken übertragen werden, das die weiteren Schritte umfasst:

falls der gewünschte Übertragungsleistungspegel ($P_{MT}$) kleiner als ein maximaler Übertragungsleistungspegel ($P_{MAX}$) der mobilen Einheit (2) zuzüglich des ersten Fehlerfaktors ist, dann:

Auswählen der dritten Coderate, falls die zum Übertragen solcher Daten benötigte Anzahl der Blöcke für die dritte Coderate und die zweite Coderate die gleiche ist.

8. Verfahren nach Anspruch 5, das den weiteren Schritt umfasst:

An der Basisstation (1): Feststellen der Coderate der von einer mobilen Einheit empfangenen Fehlerkorrektur-codierten Daten, durch Versuche der Decodierung solcher Daten unter Verwendung aller möglichen Coderaten, die der mobilen Einheit (2) zur Verfügung stehen und Auswählen der Coderate, die solche Daten am besten decodiert.

9. Verfahren nach Anspruch 5, das den weiteren Schritt umfasst:

Verschachteln (28) der Fehlerkorrektur-codierten Daten vor dem Übertragen von der mobilen Einheit (2).

10. Ein System zur Verbesserung der Übertragungsleistungsfähigkeit in einem zellularen Digitaldaten-Funkkommunikationssystem, aufweisend:

(a) ein drahtloses Übertragungssystem (1, 2) zum Übertragen von Fehlerkorrektur-codierten Daten von einer mobilen Einheit (2) zu einer Basisstation (1);

(b) einen Selektor, der an das drahtlose Übertragungssystem (1, 2) gekoppelt ist, wobei der Selektor angepasst ist Festzustellen (25), ob ein gewünschter Übertragungsleistungspegel ($P_{MT}$) kleiner als ein maximaler Übertragungsleistungspegel ($P_{MAX}$) der mobilen Einheit (2) ist:

und, falls dies zutrifft, der Selektor angepasst ist, eine erste Coderate für die mobile Einheit (2) zur Fehlerkorrekturcodierung solcher Daten und einen ersten Übertragungsleistungspegel, der kleiner oder gleich dem maximalen Übertragungsleistungspegel ($P_{MAX}$) der mobilen Einheit (2) ist, auszuwählen, wobei die mobile Einheit (2) Fehlerkorrektur-codierte Daten unter Verwendung der ersten Coderate und des ersten Übertragungsleistungspegels zur Basisstation (1) überträgt;
und falls dies nicht zutrifft, der Selektor angepasst ist, eine zweite Coderate, die kleiner als die erste Coderate ist, für die mobile Einheit (2), zur Fehlerkorrekturcodierung solcher Daten und einen zweiten Übertragungsleistungspegel, der kleiner oder gleich ist dem maximalen Übertragungsleistungspegel ($P_{MAX}$) der mobilen Einheit (2) abzüglich eines Fehlerfaktors, der sich auf die erwartete Erhöhung des Signal-Rausch Verhältnisses unter Verwendung der zweiten Coderate bezieht, auszuwählen,

wobei die mobile Einheit (2) angepasst ist zum Übertragen von Fehlerkorrektur-codierten Daten zur Basisstation (1) unter Verwendung der zweiten Coderate und des zweiten Übertragungsleistungspegels.

11. System nach Anspruch 10, weiter aufweisend:

Einen Vergleicher, der an den Selektor gekoppelt ist und der angepasst ist Festzustellen, ob die Anzahl der zum Übertragen solcher Daten benötigten Blökke für die zweite Coderate und die erste Coderate die gleiche ist und, falls dies zutrifft, angepasst ist zu bewirken, dass der Selektor die zweite Coderate bevorzugt gegenüber der ersten Coderate auswählt.

12. System nach Anspruch 10, weiter umfassend einen Interleaver, der angepasst ist zum Verschachteln (28) der Fehlerkorrektur-codierten Daten vor dem Übertragen von der mobilen Einheit (2).

13. Ein Verfahren zur Verbesserung der Übertragungsleistungsfähigkeit in einem zellularen Digitaldaten-Funkkommunikationssystem (1, 2), wobei Daten in Blöcken einer vorgegebenen Größe übertragen werden, das die Schritte aufweist:

Feststellen (24) eines gewünschten Übertragungsleistungspegels ($P_{MT}$) für eine mobile Einheit (2) zum Übertragen von Daten von der mobilen Einheit (2) zu einer Basisstation (1); Feststellen (25), ob der gewünschte Übertragungsleistungspegel ($P_{MT}$) kleiner als ein maximaler Übertragungsleistungspegel ($P_{MAX}$) der mobilen Einheit (2) ist, und falls dies zutrifft, Berechnen der benötigten Anzahl von Blöcken zum Codieren einer Nachricht, die mit einer ersten Coderate oder einer zweiten Coderate übertragen werden soll, wobei die zweite Coderate kleiner als die erste Coderate ist; und Auswählen (34) der zweiten Coderate, falls die Anzahl der zum Übertragen solcher Daten benötigten Blöcke für die zweite Coderate und die erste Coderate die gleiche ist.

14. Ein Computerprogramm zur Verbesserung der Übertragungsleistungsfähigkeit in einem zellularen Digitaldaten-Funkkommunikationssystem, wobei, wenn das Computerprogramm auf einem Computer abläuft, der Computer ein Verfahren nach einem der Ansprüche 1 bis 9 oder 13 ausführt.

15. Ein maschinenlesbares Speichermedium, das konfiguriert ist mit einem Computerprogramm gemäß Anspruch 14.

## Revendications

1. Procédé d'amélioration des performances de transmission dans un système de radiocommunication de données numériques cellulaire (1, 2), comprenant les étapes consistant à :

(a) déterminer (24) un niveau de puissance d'émission ($P_{MT}$) pour l'unité mobile (2) pour transmettre des données de l'unité mobile à une station de base (1),
(b) déterminer (25) si le niveau de puissance d'émission souhaité ($P_{MT}$) est inférieur à un niveau de puissance d'émission maximum ($P_{MAX}$) de l'unité mobile (2),
et s'il en est ainsi

(b.1) sélectionner (32) un premier taux de codage pour un codage de correction d'erreur de ces données, et un premier niveau de puissance d'émission inférieur ou égal au niveau de puissance d'émission maximum ($P_{MAX}$) de l'unité mobile (2) et transmettre les données ayant subi un codage à correction d'erreur de l'unité mobile à la station de base (1) en utilisant le premier taux de codage et le premier niveau de puissance d'émission,
et s'il n'en est pas ainsi,
(b.2) sélectionner (29) un second taux de codage, inférieur au premier taux de codage, afin de soumettre à un codage d'erreur ces données, et un second niveau de puissance d'émission inférieur ou égal au niveau de puissance d'émission maximum ($P_{MAX}$) de l'unité mobile (2) moins un facteur de biais ou de polarisation associé à l'augmentation attendue du rapport signal sur bruit en utilisant le second taux de codage, et transmettre des données ayant subi un codage à correction d'erreur de l'unité mobile (2) à la station de base (1) en utilisant le second taux de codage et le second niveau de puissance d'émission.

2. Procédé selon la revendication 1, dans lequel les données sont transmises par blocs, où dans la sousétape (b.1) avant de sélectionner le premier taux de codage, la sélection suivante est exécutée :

sélectionner (34) le second taux de codage si le nombre de blocs requis pour transmettre ces données est le même pour le second taux de codage que pour le premier taux de codage.

**3.** Procédé selon la revendication 1 ou 2, comprenant l'étape supplémentaire consistant à :

au niveau de la station de base (1), déterminer le taux de codage pour les données ayant subi un codage à correction d'erreur reçues de l'unité mobile (2) en tentant de décoder ces données en utilisant tous les taux de codage possibles disponibles pour l'unité mobile, et choisir le taux de codage qui décode le mieux ces données.

**4.** Procédé selon la revendication 1, 2 ou 3, comprenant l'étape supplémentaire consistant à :

entrelacer les données ayant subi un codage à correction d'erreur avant la transmission depuis l'unité mobile (2).

**5.** Procédé selon l'une quelconque des revendications 1 à 4, dans lequel au lieu de l'étape (b.2) les étapes suivantes sont exécutées : déterminer si le niveau de puissance d'émission souhaité ($P_{MT}$) est inférieur au niveau de puissance d'émission maximum ($P_{MAX}$) de l'unité mobile (2) plus un premier facteur de biais ou de polarisation associé à l'augmentation attendue du rapport signal sur bruit en utilisant un second taux de codage,
et s'il en est ainsi,
sélectionner le second taux de codage, inférieur au premier taux de codage, pour soumettre à un codage à correction d'erreur ces données, et un second niveau de puissance d'émission inférieur ou égal au niveau de puissance d'émission maximum ($P_{MAX}$) de l'unité mobile (2) moins le premier facteur de biais ou de polarisation, et transmettre les données ayant subi un codage à correction d'erreur de l'unité de mobile à la station de base (1) en utilisant le second taux de codage et le second niveau de puissance d'émission,
et s'il n'en est pas ainsi,
sélectionner un troisième taux de codage, inférieur au second taux de codage, pour soumettre à un codage à correction d'erreur ces données, et un troisième niveau de puissance d'émission inférieur ou égal au niveau de puissance d'émission maximum de l'unité mobile moins un second facteur de biais ou de polarisation associé au troisième taux de codage, et transmettre les données ayant subi un codage à correction d'erreur de l'unité mobile à la station de base en utilisant le troisième taux de codage et le troisième niveau de puissance d'émission.

**6.** Procédé selon la revendication 5, dans lequel les données sont transmises par blocs, comprenant les étapes supplémentaires consistant à :

si le niveau de puissance d'émission souhaité ($P_{MT}$) est inférieur à un niveau de puissance d'émission maximum ($P_{MAX}$) de l'unité mobile (2), alors :

sélectionner le troisième taux de codage si le nombre de blocs requis pour transmettre ces données est le même pour le troisième taux de codage que pour le premier taux de codage, sinon
sélectionner le second taux de codage si le nombre de blocs requis pour transmettre ces données est le même pour le second taux de codage que pour le premier taux de codage.

**7.** Procédé selon la revendication 5, dans lequel les données sont transmises par blocs, comprenant les étapes supplémentaires consistant à :

si le niveau de puissance d'émission souhaité ($P_{MT}$) est inférieur à un niveau de puissance d'émission maximum ($P_{MAX}$) de l'unité mobile (2) plus le premier facteur de biais, alors :

sélectionner le troisième taux de codage si le nombre de blocs requis pour transmettre ces données est le même pour le troisième taux de codage que pour le second taux de codage.

**8.** Procédé selon la revendication 5, comprenant une étape supplémentaire consistant à :

(a) au niveau de la station de base (1), déterminer le taux de codage pour des données ayant subi un codage à correction d'erreur reçues d'une unité mobile en tentant de décoder ces données en utilisant tous les taux de codage disponible pour l'unité mobile (2), et choisir le taux de codage qui décode le mieux ces données.

**9.** Procédé selon la revendication 5, comprenant une étape supplémentaire consistant à :

entrelacer (28) les données ayant subi un codage à correction d'erreur avant la transmission depuis l'unité mobile (2).

**10.** Système destiné à améliorer les performances de transmission dans un système de radiocommunication de données numériques cellulaire, comprenant :

(a) un système de transmission sans fil (1, 2) destiné à transmettre des données ayant subi un codage à correction d'erreur d'une unité mobile (2) à une station de base (1),
(b) un sélecteur, couplé au système de transmission sans fil (1, 2), le sélecteur étant conçu pour déterminer (25) si un niveau de puissance d'émission souhaité (P$_{MT}$) est inférieur à un niveau de puissance d'émission maximum (P$_{MAX}$) de l'unité mobile (2) :

et, s'il en est ainsi, est conçu pour sélectionner un premier taux de codage pour l'unité mobile (2) afin de soumettre à un codage à correction d'erreur ces données et un premier niveau de puissance d'émission inférieur ou égal au niveau de puissance d'émission maximum (P$_{MAX}$) de l'unité mobile (2) où l'unité mobile (2) est conçue pour transmettre des données ayant subi un codage à correction d'erreur à la station de base (1) utilisant le premier taux de codage et le premier niveau de puissance d'émission, et

s'il n'en est pas ainsi, est conçu pour sélectionner un second taux de codage, inférieur au premier taux de codage, pour l'unité mobile (2) afin de soumettre à un codage à correction d'erreur ces données et un second niveau puissance d'émission inférieur ou égal au niveau de puissance d'émission maximum (P$_{MAX}$) de l'unité mobile (2) moins un facteur de biais ou de polarisation associé à l'augmentation attendue du rapport signal sur bruit en utilisant le second taux de codage, où l'unité mobile (2) est conçue pour transmettre des données ayant subi un codage à correction d'erreur à la station de base (1) en utilisant le second taux de codage et le second niveau de puissance d'émission.

11. Système selon la revendication 10, comprenant en outre :

un comparateur couplé au sélecteur et conçu pour déterminer si le nombre de blocs requis pour transmettre ces données est le même pour le second taux de codage que pour le premier taux de codage, et s'il en est ainsi, amener alors le sélecteur à sélectionner le second taux de codage de préférence au premier taux de codage.

12. Système selon la revendication 10, comprenant en outre un module d'entrelacement conçu pour entrelacer (28) les données ayant subi un codage à correction d'erreur avant la transmission depuis l'unité mobile (2).

13. Procédé d'amélioration des performances de transmission dans un système de radiocommunication de données numériques cellulaire (1, 2) où les données sont transmises par blocs d'une taille donnée, comprenant les étapes consistant à :

déterminer (24) un niveau de puissance d'émission souhaité (P$_{MT}$) pour l'unité mobile (2) afin de transmettre des données depuis l'unité mobile à une station de base (1),
déterminer (25) si le niveau de puissance d'émission souhaité (P$_{MT}$) est inférieur à un niveau de puissance d'émission maximum (P$_{MAX}$) de l'unité mobile (2), et s'il en est ainsi,
calculer le nombre de blocs requis pour coder un message devant être transmis dans un premier taux de codage ou dans un second taux de codage, où le second taux de codage est inférieur au premier taux de codage, et
sélectionner (34) le second taux de codage si le nombre de blocs requis pour transmettre ces données est le même pour le second taux de codage que pour le premier taux de codage.

14. Programme informatique destiné à améliorer les performances de transmission dans un système de radiocommunication de données numériques cellulaire, où lorsque le programme informatique s'exécute sur un ordinateur, l'ordinateur exécute un procédé selon l'une quelconque des revendications 1 à 9 ou 13.

15. Support de mémorisation lisible par un ordinateur, configuré avec un programme informatique selon la revendication 14.

**FIG. 1**
**(prior art)**

FIG. 2a

**FIG. 2b**

FIG. 3a

FIG. 3b

FIG. 3c